# EUROPEAN PATENT SPECIFICATION

(11) **EP 3 620 707 B1**
(45) Date of publication and mention of the grant of the patent: **11.01.2023**
(21) Application number: 18192882.1
(22) Date of filing: 06.09.2018
(51) Int. Cl.: F16M 11/04, F16M 11/22, F16M 13/02, G08B 1/00

(54) **WALL MOUNT AND SMART HOME SYSTEM WITH SUCH A SMART WALL MOUNT**
WANDHALTERUNG UND INTELLIGENTES HEIMSYSTEM MIT SOLCH EINER INTELLIGENTEN WANDHALTERUNG
SUPPORT MURAL ET SYSTÈME DE MAISON INTELLIGENTE AVEC UN TEL MONTAGE MURAL INTELLIGENT

(43) Date of publication of application: 11.03.2020
(73) Proprietor: Vestel Elektronik Sanayi ve Ticaret A.S., 45030 Manisa (TR)
(72) Inventor: ÖZMEN, Ferhat, 45030 Manisa (TR); AKDEMIR, Onur, 45030 Manisa (TR)
(74) Representative: Kehl, Ascherl, Liebhoff & Ettmayr Patentanwälte Partnerschaft mbB

(56) References cited:
- WO-A1-2013/145381

## Description

### TECHNICAL FIELD

The present invention refers according to claim 1 to a wall mount for at least or exactly one display device, according to claim 12 to a method for outputting an alarm via a mobile device and according to claim 13 to a smart home system.

### BACKGROUND

Wall mounts for mounting display devices like televisions to a wall are well known. However, since televisions are very large and heavy it is very dangerous for children if a display device is detached unintentionally. Furthermore, such display devices are often very expensive and need to be theft protected.

Document WO2013/145381A1 discloses a bracket for the purpose of hooking a display apparatus on a wall surface. The bracket is provided with a laser beam source which indicates a reference line to be referenced at the time of hooking the display apparatus on the wall surface.

### OBJECT OF THE INVENTION

Thus, it is an object of the present invention to increase safety and/or security of wall mounts.

### SUMMARY OF THE INVENTION

The before mentioned object is solved by a wall mount for at least one display device, in particularly a television, according to claim 1. Said wall mount comprises at least a first holding element and a second holding element, a first positioning means for attaching to the display device and for coupling with the first holding element, a second positioning means for attaching to the display device and for coupling with the second holding element, wherein at least the first holding element comprises a positioning means detecting means for detecting presence and/or absence of the positioning means and/or relative movements between the position means and the first holding element. The first holding element comprises a data transfer unit for transmitting data indicating presence and/or absence of the position means and/or relative movements between the position means and the first holding element in dependency of signals and/or data provided by the positioning means detecting means and/or the first holding element comprises a signal outputting unit for visually and/or acoustically outputting of signals indicating presence and/or absence of the position means and/or relative movements between the position means and the first holding element in dependency of signals and/or data provided by the positioning means detecting means.

Each holing element is preferably fixed with at least two screws to a wall member or directly to a wall. The screws are preferably arranged on a horizontal line. The wall mount is preferably a plate or plate-like element. The screws are preferably for mounting the holding elements to the wall means or to the wall arranged on the same horizontal level respectively line or virtual line.

This solution is beneficial since an alarm can be outputted via a further device, in particularly a smart home device and/or an end-user device, in particularly a mobile phone, a smartwatch, a television, a laptop, a tablet PC, in case the display device is moved with respect to the holding element/s.

Further preferred embodiments are subject-matter of the dependent claims and/or of the following specification passages.

The first holding element comprises according to a further preferred embodiment of the present invention an inserting hole section for receiving a positioning means and a form-closure section, wherein the form-closure section extends less in a first direction compared to the inserting hole section, wherein the inserting hole section and the form-closure section are interconnected in such a manner that the a position means can be moved in a second direction from the inserting hole section into the form-closure section and vice versa, wherein the first direction and the second direction are orientated in an angle of 90° to each other. This embodiment is beneficial since the display device can be easily coupled to wall mount since the positioning means fit inside the inserting hole section and reliably lock in the form-closure section.

The second direction is according to a further preferred embodiment of the present invention orientated in an orientation different from a vertical orientation, in particularly in an angle between 0° and 90°, in particularly in an angle between 15° and 75°, in particularly in an angle between 30° and 60°. This embodiment is beneficial since an impact that is orientated vertically (upwards) does not cause releasing of the position means from the holding elements.

The detecting means comprises according to a further preferred embodiment of the present invention a movable element, in particularly a rod-like element, which is arranged in a movable, in particularly pivotable, manner at a main structure of the first holding element, wherein the data transfer unit is actuated in dependency of the position of the movable element. This embodiment is beneficial since the movable element acts as indicator and doubtless indicates if a display means is attached to the wall mount or not.

The movable element moves according to a further preferred embodiment of the present invention from a first position or orientation into a second position or orientation in case the position means is moved from the inserting hole section into the form-closure section. The movable element moves alternatively from a second position or orientation into a first position or orientation in case the position means is moved from the form-closure section into the inserting hole section. The data transfer unit is according to a further preferred embodiment of the present invention actuated in case the movable element is arranged in the first position or orientation or in case the movable element is arranged in the second position or orientation. This embodiment is beneficial since the movable element indirectly confirms that the position means is/are positioned in a desired respectively predefined position.

A mechanical spring is provided according to a further preferred embodiment of the present invention, wherein the spring provides forces for holding the movable element in a predefined position or orientation, in particularly in the first position or orientation. This embodiment is beneficial since the movable element is always moved into a position spaced apart form the sensor respectively contacting element respectively switch in case the display means is removed from the wall mount.

The second holding element comprises according to a further preferred embodiment of the present invention an inserting hole section for receiving a positioning means, in particularly the second position means, and a form-closure section, wherein the form-closure section extends less in a first direction compared to the inserting hole section, wherein the inserting hole section and the form-closure section are interconnected in such a manner that the second position means can be moved in a second direction from the inserting hole section into the form-closure section and vice versa, wherein the first direction and the second direction are orientated in an angle of 90° to each other. The second holding element additionally or alternatively comprises a further data transfer unit, a further positioning means detecting means, wherein the further data transfer unit is actuated in case the further position means detecting means detects a movement of a positioning means.

The data transfer unit and/or the further data transfer unit is/are according to a further preferred embodiment of the present invention connected to a sensor system that detects signals and/or data from a plurality of house infrastructure devices and/or household devices at the same time, wherein the sensor system provides sensor signals and/or sensor data, in particularly in processed manner, to a server device, in particularly a cloud server, wherein the house infrastructure devices preferably comprise a door bell, shutter and/or preferably at least one lamp and/or wherein the household devices preferably comprise an oven, a wash machine, a dish washer, a garbage can, a refrigerator and/or a coffee machine. This embodiment is beneficial since data indicating one or multiple parameters of at least two devices of a smart home system can be outputted, in particularly displayed, at the same time and/or at different times to one or more users. Alternatively, or additionally such data can be uploaded to a server device and/or stored on a local storage means.

The above-mentioned object is also solved by a method according to claim 12 for outputting an alarm via a mobile device, in particularly a smartphone or tablet PC. The inventive method preferably comprises at least the step of providing a wall mount according to any of the before mentioned claims, the step of connecting the data transfer unit to a network, in particularly via WiFi/WLAN and/or Bluetooth and/or NFC, the step of connecting the mobile device to the same network, and/or the step of outputting a signal via an outputting means of the mobile device, in particularly a screen and/or a speaker and/or a vibrating element, in case the data transfer unit was actuated.

The above mentioned object is also solved by a smart home system according to claim 13. The smart home system according to claim 13 preferably comprises at least a control unit that receives wirelessly data and/or signals from individual devices, a wall mount according to any of claims 1 to 11, and at least one further device, wherein the further device comprises at least one sensor for detecting a parameter of the device, an outputting device, in particularly a mobile device, in particularly a mobile phone or a tablet PC, wherein the outputting device outputs information in dependency of signals and/or data received from at least one or multiple or all devices of the smart home system. The control unit provides according to a further preferred embodiment of the present invention data to a server device and/or receives data from the server device, wherein the server device preferably processes the data received from the control unit. This embodiment is beneficial since the server device can match the received and/or processed data with data which belong to further smart home systems. Thus, the overall usage can be optimized since learnings from one or multiple systems or from the majority of systems can be used to operate individual systems. It is additionally or alternatively possible to access the data of a specific smart home system via the internet. Thus, an end user can access such data preferably by means of a computer, in particularly a smart phone and/or tablet PC and/or laptop and/or smartwatch.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figures. In the following the invention is just exemplarily described with respect to the attached figures.

### BRIEF DESCRIPTION OF THE DRAWINGS

For a more complete understanding of the present invention and advantages thereof, reference is now made to the following description taken in conjunction with the accompanying drawings. The invention is explained in more detail below using an exemplary embodiment which is specified in the schematic figures of the drawings, in which shows:
- Fig. 1: exemplarily a wall mount according to the present invention and
- fig. 2: a backside of a display means, wherein multiple position means are shown,
- fig. 3a: an example of a first holding element,
- fig. 3b: an example of a second holding element,
- fig. 4: a flow chart of multiple steps of a method according to the present invention and
- fig. 5: a further flow chart representing multiple steps of a further method according to the present invention.

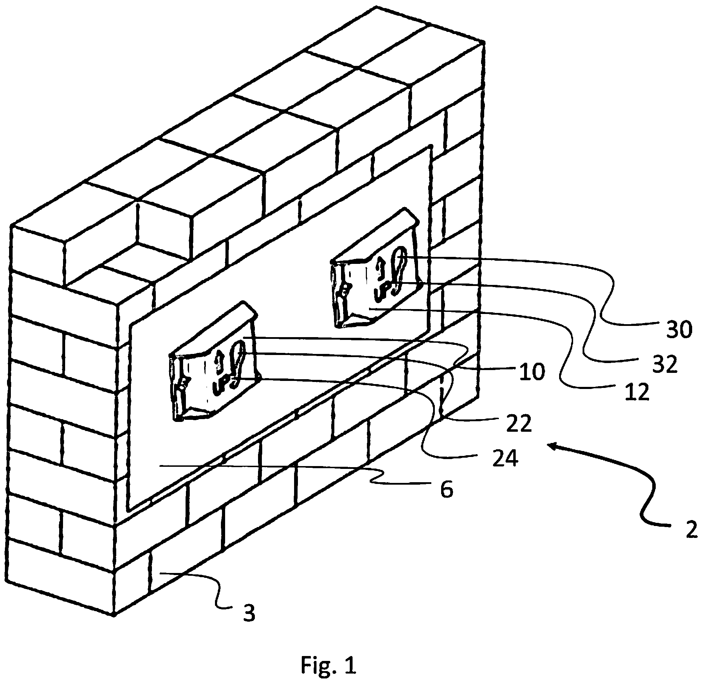

Fig. 1 shows a wall 3. It is possible to mount a wall mount 2 which comprises two or more holding elements 10, 12 directly to a wall 3. However, it is also possible that holding elements 10, 12 are arranged on a wall means 6, wherein wall means 6 is mounted to a wall 3 or can be mounted to a wall or ceiling.

The first holding element 10 comprises an inserting hole section 22 and a form closure section 24. The same applies to the second holding element 12. Reference number 30 indicates the inserting hole section of the second holding element 12 and reference number 32 indicates the form closure section of the second holding element 12.

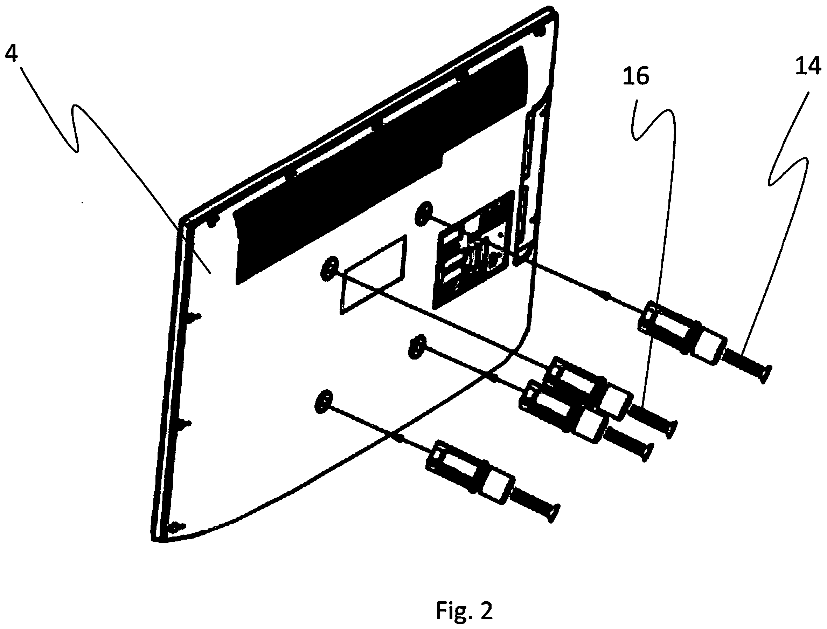

Fig. 2 shows a backside of a display means 4, in particularly a television. The display means comprises multiple connecting members for housing multiple position means 14, 16. The position means 14, 16 preferably comprises a longitudinal rod, which forms at one end a head, wherein said head preferably has a diameter larger than the other sections of said rod.

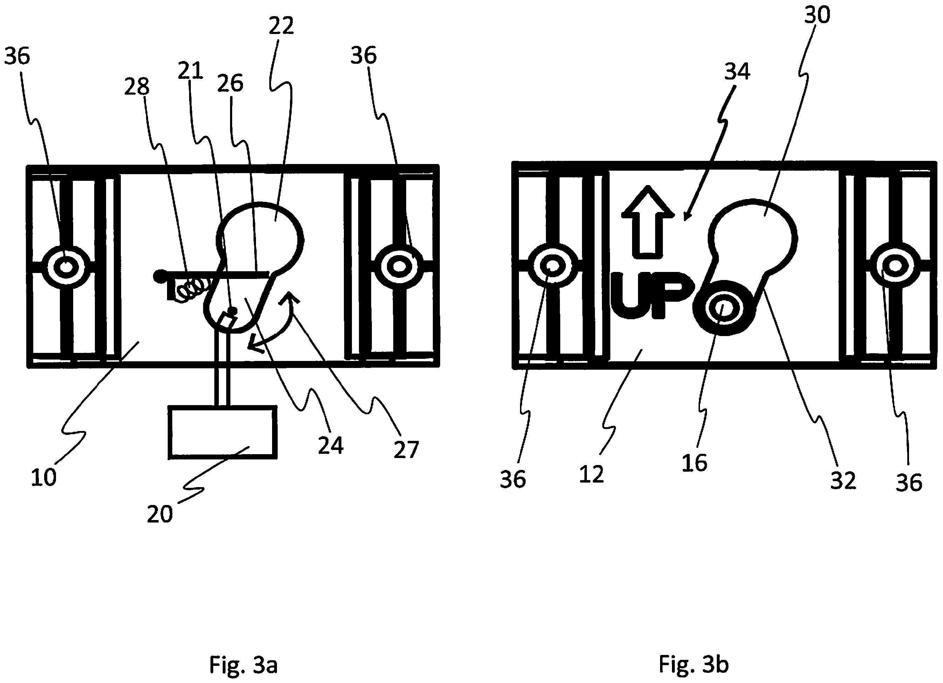

Fig. 3a shows a schematic illustration of first holding element 10. The first holding element preferably comprises a movable element 26. The movable element 26 moves in the direction of arrow 27 from a second position or orientation into a first position or orientation in case the first position means 14 is moved from the form-closure section 24 into the inserting hole section 22. Due to the movement of movement element 26 a switch 21 is actuated respectively triggered. Thus, the data transfer unit 20 is actuated in case the movable element 26 is arranged in the first position or orientation and contacts switch 21. A mechanical spring 28 is preferably provided, wherein the spring 28 provides forces for holding the movable element in a predefined position or orientation, in particularly in the first position or orientation. The spring 28 can be formed of metal or a polymer material.

Thus, the present invention refers to a wall mount 2 for at least one display device 4, in particularly a television. Wall mount 2 preferably comprises a wall means 6 for arranging at a physical wall 8, in particularly a wall of a building, wherein the wall means 6 comprises at least a first holding element 10 and preferably a second holding element 12. A first positioning means 14 for attaching to the display device 4 and for coupling with the first holding element 10. Preferably a second positioning means 16 for attaching to the display device 4 and for coupling with the second holding element 12. The first holding element 10 preferably comprises a positioning means detecting means 18 for detecting presence and/or absence of the first positioning means 14 and/or relative movements between the first positioning means 14 and the first holding element 10. The first holding element 10 preferably comprises a data transfer unit 20 for transmitting data indicating presence and/or absence of the first position means 14 and/or relative movements between the first position means 14 and the first holding element 10 in dependency of signals and/or data provided by the positioning means detecting means 18, and/or the first holding element 10 comprises a signal outputting unit for visually and/or acoustically outputting of signals indicating presence and/or absence of the first position means 14 and/or relative movements between the first position means 14 and the first holding element 10 in dependency of signals and/or data provided by the positioning means detecting means 18. It is also possible that 3 or 4 or up to 3 or 4 or more than 3 or more than 4 holding elements are provided for holding one or exactly one display device.

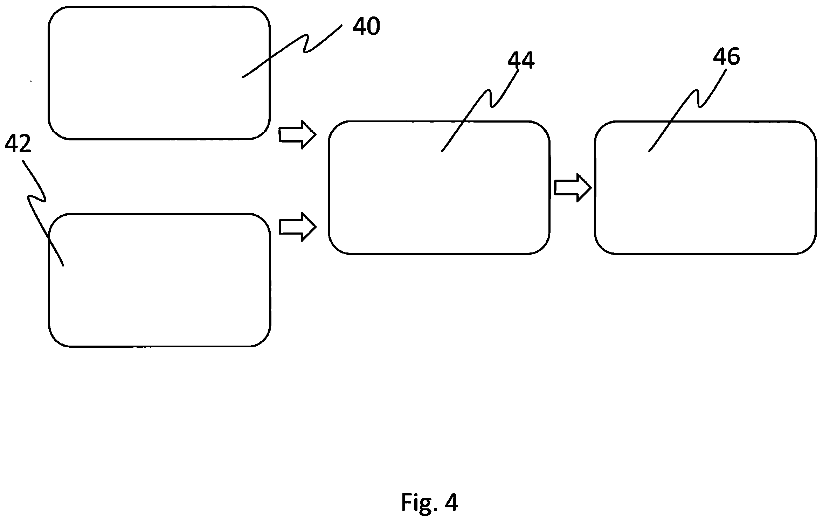

Fig. 4 shows a flow chart. That flow chart represents the steps "providing mechanical key and spring system" 40 preferably as integral part of wall mount 2. Additionally the step "providing data transfer unit / module, in particularly WiFi module" 42 is carried out. Furthermore, a control unit is provided 44. The control unit receives signals and/or data transmitted via the data transfer unit of wall mount 2. Thus, a warning system (audio, visual, haptic, etc.) is provided 46 since the data and/or signals are received by an outputting device that outputs cotent that represents the alarm information.

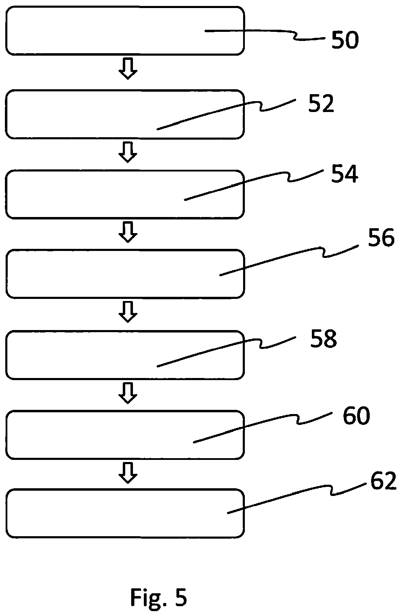

Fig. 5 shows a flow chart. According to the flow chart the present invention comprises one, multiple or all of the following steps:
50: The suspended wall is mounted. Minimum two wall hangers will be used.
52: Key lock. The spring system of the wall hanging system (wall mount) uses an installed mechanical key structure.
54: Smart home warning system will be provided by the movement of the installed mechanical key structure, wherein the spring system is connected to the data transfer unit.
56: The mechanical switch operating ratio will normally be in the off position. When any device is installed on the wall hanging apparatus (wall mount), the mechanical key structure will be activated by the movement of the spring system.
58: In case of involuntary intervention (e.g. impact) the wall hanging pin of the device will come out of the suspension peg.
60: By means of a mechanical switch position changeover with the attached spring system, the warning system (audible and/or visual, etc.) is switched on.
62: The user is informed of the non-conformity in the suspension system

### LIST OF REFERENCE NUMBERS

- 2: wall mount
- 3: wall
- 4: display device
- 6: wall means
- 8: physical wall
- 10: first holding element
- 12: second holding element
- 14: first positioning means
- 16: second positioning means
- 18: positioning means detecting means
- 20: data transfer unit
- 21: contacting element /switch
- 22: inserting hole section
- 24: form-closure section
- 26: movable element
- 27: pivoting direction of movable element
- 28: spring
- 30: inserting hole section of second holding element
- 32: form-closure section of second holding element
- 34: marking
- 36: fixing element / screw
- 40: providing mechanical key and spring system
- 42: providing data transfer unit / module, in particularly WiFi module
- 44: providing control unit
- 46: providing warning system (audio, visual, haptic, etc.)
- 50-62: preferred steps of an usage of the wall mount

## Claims

1. Wall mount (2) for at least one display device (4), in particularly a television,
at least comprising
a wall means (6) for arranging at a physical wall (8), in particularly a wall of a building,
wherein the wall means (6) comprises at least a first holding element (10) and a second holding element (12),
a first positioning means (14) for attaching to the display device (4) and for coupling with the first holding element (10),
a second positioning means (16) for attaching to the display device (4) and for coupling with the second holding element (12),
wherein at least the first holding element (10) comprises a positioning means detecting means (18) for detecting presence and/or absence of the first positioning means (14) and/or relative movements between the first positioning means (14) and the first holding element (10),
**characterized in that**
the first holding element (10) comprises a data transfer unit (20) for transmitting data indicating presence and/or absence of the first position means (14) and/or relative movements between the first position means (14) and the first holding element (10) in dependency of signals and/or data provided by the positioning means detecting means (18).

2. Wall mount (1) according to claim 1,
**characterized in that**
the first holding element (10) comprises an inserting hole section (22) for receiving the first positioning means (14) and a form-closure section (24), wherein the form-closure section (24) extends less in a first direction compared to the inserting hole section (22), wherein the inserting hole section (22) and the form-closure section (24) are interconnected in such a manner that the a first position means (14) can be moved in a second direction from the inserting hole section (22) into the form-closure section (24) and vice versa, wherein the first direction and the second direction are orientated in an angle of 90° to each other.

3. Wall mount (1) according to claim 1 or 2,
**characterized in that**
the second direction is orientated in an orientation different from a vertical orientation, in particularly in an angle between 0° and 90°, in particularly in an angle between 15° and 75°, in particularly in an angle between 30° and 60°.

4. Wall mount (1) according to any of the preceding claims,
**characterized in that**
the position means detecting means (18) comprises a movable element (26), in particularly a rod-like element, which is arranged in a movable, in particularly pivotable, manner at a main structure of the first holding element (10), wherein the data transfer unit (20) is actuated in dependency of the position of the movable element (26).

5. Wall mount (1) according to any of the preceding claims,
**characterized in that**
the movable element (26) moves from a first position or orientation into a second position or orientation in case the first position means (14) is moved from the inserting hole section (22) into the form-closure section (24).

6. Wall mount (1) according to any of the preceding claims,
**characterized in that**
the movable element (26) moves from a second position or orientation into a first position or orientation in case the first position means (14) is moved from the form-closure section (24) into the inserting hole section (22).

7. Wall mount (1) according to any of the preceding claims,
**characterized in that**
the data transfer unit (20) is actuated in case the movable element (26) is arranged in the first position or orientation or in case the movable element (26) is arranged in the second position or orientation.

8. Wall mount (1) according to any of the preceding claims,
**characterized in that**
a mechanical spring (28) is provided, wherein the spring (28) provides forces for holding the movable element in a predefined position or orientation, in particularly in the first position or orientation.

9. Wall mount (1) according to any of the preceding claims,
**characterized in that**
the second holding element (12) comprises an inserting hole section (30) for receiving the second positioning means (16) and a form-closure section (32), wherein the form-closure section (32) extends less in a first direction compared to the inserting hole section (30), wherein the inserting hole section (30) and the form-closure section (32) are interconnected in such a manner that the second position means (16) can be moved in a second direction from the inserting hole section (30) into the form-closure section (32) and vice versa, wherein the first direction and the second direction are orientated in an angle of 90° to each other.

10. Wall mount (1) according to claim 9,
**characterized in that**
the second holding element (12) comprises a further data transfer unit, a further positioning means detecting means, wherein the further data transfer unit is actuated in case the further position means detecting means detects a movement of a positioning means.

11. Wall mount (1) according to any of the preceding claims,
**characterized in that**
the data transfer unit/s is/are connected to a sensor system that detects signals and/or data from a plurality of house infrastructure devices and/or household devices at the same time, wherein the sensor system provides sensor signals and/or sensor data, in particularly in processed manner, to a server device, in particularly a cloud server, wherein the house infrastructure devices preferably comprise a door bell, shutter and/or preferably at least one lamp and/or wherein the household devices preferably comprise an oven, a wash machine, a dish washer, a garbage can, a refrigerator and/or a coffee machine.

12. Method for outputting an alarm via a mobile device, in particularly a smartphone or tablet PC,
at least comprising the step of providing a wall mount (2) according to any of the before mentioned claims,
the step of connecting the data transfer unit (20) to a network, in particularly via WiFi/WLAN and/or Bluetooth and/or NFC,
the step of connecting the mobile device to the same network,
the step of outputting a signal via an outputting means of the mobile device, in particularly a screen and/or a speaker and/or a vibrating element, in case the data transfer unit was actuated in dependency of a movement of a positioning means.

13. Smart home system,
at least comprising
a control unit that receives wirelessly data and/or signals from individual devices
a wall mount according to any of claims 1 to 11, and
at least one further device, wherein the further device comprises at least one sensor for detecting a parameter of the device
an outputting device, in particularly a mobile device, in particularly a mobile phone or a tablet PC, wherein the outputting device outputs information in dependency of signals and/or data received from at least one or multiple or all devices of the smart home system.

14. Smart home system,
according to claim 13,
wherein the control unit provides data to a server device and/or receives data from the server device,
wherein the server device preferably processes the data received from the control unit.

## Patentansprüche

1. Wandhalterung (2) für mindestens eine Display Vorrichtung (4), insbesondere ein Fernsehgerät,
die zumindest aufweist
eine Wandeinrichtung (6) zum Anordnen an einer physischen Wand (8), insbesondere einer Wand eines Gebäudes,
wobei die Wandeinrichtung (6) zumindest ein erstes Halteelement (10) und ein zweites Halteelement (12) aufweist,
ein erstes Positionierungsmittel (14) zum Anbringen an der Display Vorrichtung (4) und zum Koppeln mit dem ersten Halteelement (10),
ein zweites Positionierungsmittel (16) zum Anbringen an der Display Vorrichtung (4) und zum Koppeln mit dem zweiten Halteelement (12),
wobei zumindest das erste Halteelement (10) ein Positionierungsmittel-Erfassungsmittel (18) aufweist, um das Vorhandensein und/oder die Abwesenheit des ersten Positionierungsmittels (14) und/oder relative Bewegungen zwischen dem ersten Positionierungsmittel (14) und dem ersten Halteelement (10) zu erfassen,
**dadurch gekennzeichnet, dass**
das erste Halteelement (10) eine Datentransfereinheit (20) zum Übertragen von Daten aufweist, die die Anwesenheit und/oder Abwesenheit des ersten Positionierungsmittels (14) und/oder Relativbewegungen zwischen dem ersten Positionierungsmittel (14) und dem ersten Halteelement (10) in Abhängigkeit von Signalen und/oder Daten anzeigen, die von dem Positionierungsmittel-Erfassungsmittel (18) bereitgestellt werden.

2. Wandhalterung (1) gemäß Anspruch 1,
**dadurch gekennzeichnet, dass**
das erste Halteelement (10) einen Einstecklochabschnitt (22) zur Aufnahme des ersten Positionierungsmittels (14) und einen Formschlussabschnitt (24) aufweist, wobei sich der Formschlussabschnitt (24) im Vergleich zum Einstecklochabschnitt (22) weniger in eine erste Richtung erstreckt, wobei der Einstecklochabschnitt (22) und der Formverschlußabschnitt (24) derart miteinander verbunden sind, daß das erste Positionierungsmittel (14) in einer zweiten Richtung von dem Einstecklochabschnitt (22) in den Formverschlußabschnitt (24) und umgekehrt bewegt werden kann, wobei die erste Richtung und die zweite Richtung in einem Winkel von 90° zueinander ausgerichtet sind.

3. Wandhalterung (1) gemäß Anspruch 1 oder 2,
**dadurch gekennzeichnet, dass**
die zweite Richtung in einer von einer vertikalen Ausrichtung abweichenden Orientierung ausgerichtet ist, insbesondere in einem Winkel zwischen 0° und 90°, insbesondere in einem Winkel zwischen 15° und 75°, insbesondere in einem Winkel zwischen 30° und 60°.

4. Wandhalterung (1) gemäß einem der vorhergehenden Ansprüche,
**dadurch gekennzeichnet, dass**
die Positionierungsmittel-Erfassungsmittel (18) ein bewegliches Element (26), insbesondere ein stabförmiges Element, aufweist, das beweglich, insbesondere schwenkbar, an einer Hauptstruktur des ersten Halteelements (10) angeordnet ist, wobei die Datentransfereinheit (20) in Abhängigkeit von der Position des beweglichen Elements (26) betätigt wird.

5. Wandhalterung (1) gemäß einem der vorhergehenden Ansprüche,
**dadurch gekennzeichnet, dass**
das bewegliche Element (26) sich von einer ersten Position oder Ausrichtung in eine zweite Position oder Ausrichtung bewegt, wenn das erste Positionsmittel (14) von dem Einstecklochabschnitt (22) in den Formschlussabschnitt (24) bewegt wird.

6. Wandhalterung (1) gemäß einem der vorhergehenden Ansprüche,
**dadurch gekennzeichnet, dass**
das bewegliche Element (26) sich von einer zweiten Position oder Ausrichtung in eine erste Position oder Ausrichtung bewegt, wenn das erste Positionsmittel (14) von dem Formverschlußabschnitt (24) in den Einstecklochabschnitt (22) bewegt wird.

7. Wandhalterung (1) gemäß einem der vorhergehenden Ansprüche,
**dadurch gekennzeichnet, dass**
die Datentransfereinheit (20) betätigt wird, wenn das bewegliche Element (26) in der ersten Position oder Ausrichtung angeordnet ist oder wenn das bewegliche Element (26) in der zweiten Position oder Ausrichtung angeordnet ist.

8. Wandhalterung (1) gemäß einem der vorhergehenden Ansprüche,
**dadurch gekennzeichnet, dass**
eine mechanische Feder (28) bereitgestellt wird, wobei die Feder (28) Kräfte bereitstellt, um das bewegliche Element in einer vordefinierten Position oder Ausrichtung, insbesondere in der ersten Position oder Ausrichtung, zu halten.

9. Wandhalterung (1) gemäß einem der vorhergehenden Ansprüche,
**dadurch gekennzeichnet, dass**
das zweite Halteelement (12) einen Einstecklochabschnitt (30) zur Aufnahme des zweiten Positionierungsmittels (16) und einen Formschlussabschnitt (32) aufweist, wobei sich der Formschlussabschnitt (32) im Vergleich zum Einstecklochabschnitt (30) weniger in eine erste Richtung erstreckt, wobei der Einführungslochabschnitt (30) und der Formverschlußabschnitt (32) derart miteinander verbunden sind, daß das zweite Positionierungsmittel (16) in einer zweiten Richtung von dem Einführungslochabschnitt (30) in den Formverschlußabschnitt (32) und umgekehrt bewegt werden kann, wobei die erste Richtung und die zweite Richtung in einem Winkel von 90° zueinander ausgerichtet sind.

10. Wandhalterung (1) gemäß Anspruch 9,
**dadurch gekennzeichnet, dass**
das zweite Halteelement (12) eine weitere Datentransfereinheit und eine weitere Positionierungsmittel-Detektionseinrichtung aufweist, wobei die weitere Datentransfereinheit betätigt wird, wenn die weitere Positionierungsmittel-Detektionseinrichtung eine Bewegung eines Positionierungsmittels detektiert.

11. Wandhalterung (1) gemäß einem der vorhergehenden Ansprüche,
**dadurch gekennzeichnet, dass**
die Datentransfereinheit(en) mit einer Sensorik verbunden ist/sind, die Signale und/oder Daten von mehreren Hausinfrastrukturgeräten und/oder Haushaltsgeräten gleichzeitig erfasst, wobei die Sensorik Sensorsignale und/oder Sensordaten, insbesondere aufbereitet, an eine Servervorrichtung, insbesondere einen Cloud-Server, bereitstellt, wobei die Hausinfrastrukturgeräte vorzugsweise eine Türklingel, einen Rollladen und/oder vorzugsweise mindestens eine Lampe aufweisen und/oder wobei die Haushaltsgeräte vorzugsweise einen Backofen, eine Waschmaschine, eine Spülmaschine, einen Mülleimer, einen Kühlschrank und/oder eine Kaffeemaschine aufweisen.

12. Verfahren zur Ausgabe eines Alarms über eine mobile Vorrichtung, insbesondere ein Smartphone oder einen Tablet-PC,
das zumindest den Schritt des Bereitstellens einer Wandhalterung (2) gemäß einem der vorgenannten Ansprüche aufweist,
den Schritt des Verbindens der Datentransfereinheit (20) mit einem Netzwerk, insbesondere über WiFi/WLAN und/oder Bluetooth und/oder NFC,
den Schritt des Verbindens der mobilen Vorrichtung mit demselben Netzwerk,
den Schritt des Ausgebens eines Signals über ein Ausgabemittel der mobilen Vorrichtung, insbesondere einen Bildschirm und/oder einen Lautsprecher und/oder ein Vibrationselement, für den Fall, dass die Datentransfereinheit in Abhängigkeit von einer Bewegung eines Positionierungsmittels betätigt wurde.

13. Smart-Home-System,
das zumindest aufweist
eine Steuereinheit, die drahtlos Daten und/oder Signale von einzelnen Vorrichtungen empfängt
eine Wandhalterung gemäß einem der Ansprüche 1 bis 11, und
mindestens eine weitere Vorrichtung, wobei die weitere Vorrichtung mindestens einen Sensor zur Erfassung eines Parameters der Vorrichtung aufweist
eine Ausgabevorrichtung, insbesondere eine mobile Vorrichtung, insbesondere ein Mobiltelefon oder einen Tablet-PC, wobei die Ausgabevorrichtung in Abhängigkeit von Signalen und/oder Daten, die von mindestens einer oder mehreren oder allen Vorrichtungen des Smart Home Systems empfangen werden, Informationen ausgibt.

14. Smart-Home-System,
gemäß Anspruch 13,
wobei die Steuereinheit Daten an eine Servervorrichtung bereitstellt und/oder Daten von der Servervorrichtung empfängt,
wobei die Servervorrichtung vorzugsweise die von der Steuereinheit empfangenen Daten verarbeitet.

## Revendications

1. Support mural (2) pour au moins un dispositif d'affichage (4), en particulier un téléviseur, comprenant au moins
un moyen mural (6) destiné à être disposé sur un mur physique (8), en particulier un mur d'un bâtiment,
dans lequel le moyen de paroi (6) comprend au moins un premier élément de maintien (10) et un second élément de maintien (12),
un premier moyen de positionnement (14) destiné à être fixé au dispositif d'affichage (4) et à être couplé au premier élément de maintien (10),
un second moyen de positionnement (16) destiné à être fixé au dispositif d'affichage (4) et à être couplé au second élément de maintien (12),
dans lequel au moins le premier élément de maintien (10) comprend un moyen de détection de moyen de positionnement (18) pour détecter la présence et/ou l'absence du premier moyen de positionnement (14) et/ou les mouvements relatifs entre le premier moyen de positionnement (14) et le premier élément de maintien (10),
**caractérisé en ce que**
le premier élément de maintien (10) comprend une unité de transfert de données (20) pour transmettre des données indiquant la présence et/ou l'absence des premiers moyens de positionnement (14) et/ou des mouvements relatifs entre les premiers moyens de positionnement (14) et le premier élément de maintien (10) en fonction de signaux et/ou de données fournis par les moyens de détection de moyens de positionnement (18).

2. Support mural (1) selon la revendication 1,
**caractérisé en ce que**
le premier élément de maintien (10) comprend une section de trou d'insertion (22) pour recevoir le premier moyen de positionnement (14) et une section de fermeture de forme (24), dans laquelle la section de fermeture de forme (24) s'étend moins dans une première direction par rapport à la section de trou d'insertion (22), dans lequel la section de trou d'insertion (22) et la section de fermeture de forme (24) sont interconnectées de telle manière que le premier moyen de positionnement (14) peut être déplacé dans une seconde direction depuis la section de trou d'insertion (22) dans la section de fermeture de forme (24) et vice versa, dans lequel la première direction et la seconde direction sont orientées dans un angle de 90° l'une par rapport à l'autre.

3. Support mural (1) selon la revendication 1 ou 2,
**caractérisé en ce que**
la deuxième direction est orientée dans une orientation différente d'une orientation verticale, en particulier dans un angle compris entre 0° et 90°, en particulier dans un angle compris entre 15° et 75°, en particulier dans un angle compris entre 30° et 60°.

4. Support mural (1) selon l'une quelconque des revendications précédentes,
**caractérisé en ce que**
le moyen de détection de position (18) comprend un élément mobile (26), en particulier un élément en forme de tige, qui est disposé de manière mobile, en particulier pivotante, sur une structure principale du premier élément de maintien (10), l'unité de transfert de données (20) étant actionnée en fonction de la position de l'élément mobile (26).

5. Support mural (1) selon l'une quelconque des revendications précédentes,
**caractérisé en ce que**
l'élément mobile (26) passe d'une première position ou orientation à une seconde position ou orientation lorsque le premier moyen de positionnement (14) est déplacé de la section de trou d'insertion (22) à la section de fermeture de formulaire (24).

6. Support mural (1) selon l'une quelconque des revendications précédentes,
**caractérisé en ce que**
l'élément mobile (26) passe d'une deuxième position ou orientation à une première position ou orientation lorsque le premier moyen de positionnement (14) est déplacé de la section de fermeture de forme (24) à la section de trou d'insertion (22).

7. Support mural (1) selon l'une quelconque des revendications précédentes,
**caractérisé en ce que**
l'unité de transfert de données (20) est actionnée dans le cas où l'élément mobile (26) est disposé dans la première position ou orientation ou dans le cas où l'élément mobile (26) est disposé dans la deuxième position ou orientation.

8. Support mural (1) selon l'une quelconque des revendications précédentes,
**caractérisé en ce que**
un ressort mécanique (28) est prévu, le ressort (28) fournissant des forces pour maintenir l'élément mobile dans une position ou une orientation prédéfinie, en particulier dans la première position ou ori- gination.

9. Support mural (1) selon l'une quelconque des revendications précédentes,
**caractérisé en ce que**
le deuxième élément de maintien (12) comprend une section de trou d'insertion (30) pour recevoir le deuxième moyen de positionnement (16) et une section de fermeture de forme (32), dans lequel la section de fermeture de forme (32) s'étend moins dans une première direction par rapport à la section de trou d'insertion (30), dans lequel la section de trou d'insertion (30) et la section de fermeture de forme (32) sont interconnectées de telle manière que le second moyen de positionnement (16) peut être déplacé dans une seconde direction depuis la section de trou d'insertion (30) dans la section de fermeture de forme (32) et vice versa, dans lequel la première direction et la seconde direction sont orientées dans un angle de 90° l'une par rapport à l'autre.

10. Support mural (1) selon la revendication 9,
**caractérisé en ce que**
le deuxième élément de maintien (12) comprend une autre unité de transfert de données, un autre moyen de détection de moyen de positionnement, dans lequel l'autre unité de transfert de données est actionnée dans le cas où l'autre moyen de détection de moyen de positionnement détecte un mouvement d'un moyen de positionnement.

11. Support mural (1) selon l'une quelconque des revendications précédentes,
**caractérisé en ce que**
la ou les unités de transfert de données sont connectées à un système de capteurs qui détecte simultanément des signaux et/ou des données provenant d'une pluralité de dispositifs d'infrastructure domestique et/ou de dispositifs domestiques, le système de capteurs fournissant des signaux de capteurs et/ou des données de capteurs, en particulier sous forme de données traitées, à un dispositif serveur, en particulier un serveur en nuage, les dispositifs d'infrastructure domestique comprenant de préférence une sonnette, un volet et/ou de préférence au moins une lampe et/ou les dispositifs domestiques comprenant de préférence un four, un lave-linge, un lave-vaisselle, une poubelle, un réfrigérateur et/ou une machine à café.

12. Méthode pour émettre une alarme via un dispositif mobile, en particulier un smartphone ou une tablette PC,
comprenant au moins l'étape consistant à fournir un support mural (2) selon l'une quelconque des revendications mentionnées ci-dessus,
l'étape consistant à connecter l'unité de transfert de données (20) à un réseau, en particulier via WiFi/WLAN et/ou Bluetooth et/ou NFC,
l'étape consistant à connecter le dispositif mobile au même réseau,
l'étape consistant à émettre un signal via un moyen d'émission du dispositif mobile, en particulier un écran et/ou un haut-parleur et/ou un élément vibrant, dans le cas où l'unité de transfert de données a été actionnée en fonction d'un mouvement d'un moyen de positionnement.

13. Système de maison intelligente,
comprenant au moins
une unité de commande qui reçoit sans fil des données et/ou des signaux provenant de dispositifs individuels
un support mural selon l'une quelconque des revendications 1 à 11, et
au moins un autre dispositif, dans lequel l'autre dispositif comprend au moins un capteur pour détecter un paramètre du dispositif
un dispositif de sortie, en particulier un dispositif mobile, en particulier un téléphone mobile ou une tablette PC, dans lequel le dispositif de sortie sort des informations en fonction des signaux et/ou des données reçus d'au moins un ou plusieurs ou tous les dispositifs du système de maison intelligente.

14. Système domestique intelligent,
selon la revendication 13,
dans lequel l'unité de commande fournit des données à un dispositif serveur et/ou reçoit des données du dispositif serveur,
dans lequel le dispositif serveur traite de préférence les données reçues de l'unité de commande.
